# EUROPEAN PATENT SPECIFICATION

(11) **EP 3 511 852 B1**
(45) Date of publication and mention of the grant of the patent: **28.04.2021**
(21) Application number: 18151455.5
(22) Date of filing: 12.01.2018
(51) Int. Cl.: G06F 21/42, H04L 29/06

(54) **METHOD FOR PROVIDING AN ENHANCED LEVEL OF AUTHENTICATION RELATED TO A SECURE SOFTWARE CLIENT APPLICATION THAT IS PROVIDED, BY AN APPLICATION DISTRIBUTION ENTITY, IN ORDER TO BE TRANSMITTED TO A CLIENT COMPUTING DEVICE; SYSTEM, SOFTWARE CLIENT APPLICATION INSTANCE OR CLIENT COMPUTING DEVICE, THIRD PARTY SERVER ENTITY, AND PROGRAM AND COMPUTER PROGRAM PRODUCT**
VERFAHREN ZUR BEREITSTELLUNG EINER VERBESSERTEN AUTHENTIFIZIERUNGSEBENE IN BEZUG AUF EINE SICHERE SOFTWARE-CLIENT-ANWENDUNG, DIE VON EINER ANWENDUNGSVERTEILUNGSENTITÄT BEREITGESTELLT WIRD, ZUR ÜBERTRAGUNG AN EINE CLIENT-RECHENVORRICHTUNG, SYSTEM, SOFTWARE-CLIENT-ANWENDUNGSINSTANZ ODER CLIENT-RECHENVORRICHTUNG, DRITTSERVER-INSTANZ, PROGRAMM UND COMPUTERPROGRAMMPRODUKT
PROCÉDÉ PERMETTANT DE FOURNIR UN NIVEAU AMÉLIORÉ D'AUTHENTIFICATION ASSOCIÉE À UNE APPLICATION CLIENT DE LOGICIEL SÉCURISÉE FOURNIE PAR UNE ENTITÉ DE DISTRIBUTION D'APPLICATION AFIN D'ÊTRE TRANSMISE À UN DISPOSITIF INFORMATIQUE CLIENT, SYSTÈME, INSTANCE D'APPLICATION CLIENT DE LOGICIEL OU DISPOSITIF INFORMATIQUE CLIENT, ENTITÉ SERVEUR TIERS ET PROGRAMME ET PRODUIT-PROGRAMME D'ORDINATEUR

(43) Date of publication of application: 17.07.2019
(73) Proprietor: Deutsche Telekom AG, 53113 Bonn (DE)
(72) Inventor: FRIELINGSDORF, Matthias, 53227 Bonn (DE); SCHENK, Volker, 53881 Euskirchen (DE)
(74) Representative: Schwöbel, Thilo K.

(56) References cited:
- WO-A1-2016/019106
- US-A1- 2017 078 881
- US-B2- 9 628 459

## Description

### BACKGROUND

The present invention relates to a method for providing an enhanced level of authentication related to a secure software client application that is provided, by an application distribution entity, in order to be transmitted, using a telecommunications network, to a client computing device in view of software code of the software client application being executed by the client computing device.

The present invention further relates to a system for providing an enhanced level of authentication related to a secure software client application that is provided, by an application distribution entity, in order to be transmitted, using a telecommunications network, to a client computing device in view of software code of the software client application being executed by the client computing device, the system comprising the client computing device, the application distribution entity, and a third party server entity.

Additionally, the invention relates to a software client application instance or client computing device for providing an enhanced level of authentication related to the secure software client application that is provided, by an application distribution entity, in order to be transmitted, using a telecommunications network, to the client computing device in view of software code of the software client application being executed by the client computing device.

Furthermore, the invention relates to a third party server entity for providing an enhanced level of authentication related to a secure software client application that is provided, by an application distribution entity, in order to be transmitted, using a telecommunications network, to a client computing device in view of software code of the software client application being executed by the client computing device.

Furthermore, the invention relates to a program comprising a computer readable program code and to a computer program product for providing an enhanced level of authentication related to a secure software client application provided by an application distribution entity.

Today, software - or applications or apps - to be used by client devices (such as desktop computers, or mobile computers such as tablets, mobile phones or the like) is often distributed using download stores or application stores. It is known to provide application stores such that the downloaded software is at least adapted to the client device class, i.e. a different version of the software could be downloaded dependent on whether the requesting client device is, e.g., a phone device or a tablet device.

However, it becomes more and more important - especially with respect to the development of the internet of things or mobile devices handling sensitive data - that data provided by client devices can be trusted. Since such data are typically provided by software client applications, the software client applications need to be trusted, hence the software client application need to be authenticated. WO 2016/019106 A1, US 2017/078881 A1 and US9628459 B2 are considered prior art.

### SUMMARY

An object of the present invention is to provide a cost effective and comparatively fast solution, especially an automated solution, for providing an enhanced level of authentication related to a secure software client application that is provided by an application distribution entity and transmitted to a client computing device, and/or for providing an enhanced level of authentication related to data generated or provided by such a secure software client application.

The object of the present invention is achieved by a method for providing an enhanced level of authentication related to a secure software client application that is provided, by an application distribution entity, in order to be transmitted, using a telecommunications network, to a client computing device in view of software code of the software client application being executed by the client computing device,
wherein a first secure communication channel is established - in view of transmitting an instance of the software client application to the client computing device - between the client computing device and the application distribution entity, and wherein a second secure communication channel is established between the application distribution entity and a third party server entity,
wherein the method comprises the following steps:
-- in a first step, an asymmetric pair of cryptographic keys and/or a security token information is generated as a protected information in view of subsequently allowing for an authenticated transmission of data - provided by the software client application instance upon it being executed by the client computing device - to the third party server entity,
   wherein the protected information is generated by the third party server entity and/or by a trusted entity, and wherein a first partial information and at least a second partial information is derived from the protected information,
-- wherein in a second step, subsequent to the first step, the first partial information is transmitted to the client computing device, the first partial information being transmitted - besides the software client application instance - using at least the first secure communication channel,
-- wherein in a third step, subsequent to the first step, the at least second partial information is transmitted to the client computing device, the at least second partial information being transmitted using a third communication channel, different from the first secure communication channel, wherein at least the first partial information and the second partial information are necessary to obtain the protected information.

According to the present invention, it is thereby advantageously possible that a software client application can be authenticated - i.e. provided with an enhanced level of authentication related to the software client application - (and thereby rendered more secure compared to a non-authenticated software client application) in an automated manner by means of a protected information (typically an asymmetric pair of cryptographic keys and/or a security token information) being generated in view of subsequently allowing for an authenticated transmission of data between, on the one hand, the client computing device (and/or the software client application entity on the client computing device), and, on the other hand, the third party server entity. Typically, such an exchange of data between the client computing device and the third party server entity is sought for - especially data (such as, e.g., sensor data) provided by the software client application instance upon it being executed by the client computing device. According to the present invention, it is advantageously possible that the protected information (typically an asymmetric pair of cryptographic keys and/or a security token information) is not (or does not necessarily be) disclosed or known to the application distribution entity; this being achieved by means of the third party server entity and/or a trusted entity (typically either the third party server entity or the trusted entity) deriving, from the protected information, a first partial information and at least a second partial information, wherein the first partial information is transmitted to the client computing device (using the first secure communication channel, and the first partial information being typically transmitted besides (i.e. along with) the software client application instance), and the at least second partial information is transmitted to the client computing device using a third communication channel (or at least a third communication channel), different from the first secure communication channel, wherein at least the first partial information and the second partial information are necessary to obtain the protected information.
As a consequence, only the first partial information is transmitted to the client computing device using the first secure communication channel, i.e. via the application distribution entity, and the (at least) second partial information is not transmitted using the first secure communication channel (but using at least the third communication channel). Hence, it is possible that the application distribution entity is not involved in the authenticated transmission of data between the client computing device and the third party server entity (in a manner such that the application distribution entity would necessarily be able to decrypt and/or authenticate the data generated by the software client application instance). The third communication channel is not necessarily a secure communication channel (but might be).

Typically, the first partial information is transmitted to the client computing device using not only the first secure communication channel but additionally the second secure communication channel between the application distribution entity and the third party server entity. It is thereby advantageously possible according to the present invention to securely (i.e. in a protected manner) transmit the first partial information to the client computing device, ensuring confidentiality and/or integrity of the first partial information during transmission.

According to the present invention, it is advantageously possible to provide a cryptographically strong authentication of the client computing device and/or of the software client application instance: For each software client application instance that is executed on the client computing device and for which the method according to the present invention is used, a client certificate or client secret is present, on the client computing device and/or within the software client application instance, by means of which a mutual authentication of the communication channel between the software client application instance (and/or the respective client computing device), on the one hand, and the third party server entity (especially my means of conventionally used server certificates), on the other hand, is possible. Thereby, it is advantageously possible according to the present invention to provide an enhanced level of authentication concerning the communication (i.e. the data exchanged or transmitted) between the software client application instances of the client computing device and the third party server entity, especially relating to data generated or provided by such a secure software client application, such as, e.g., medical data, bank relating data or the like, and this with the possibility of excluding the application distribution entity from having access to (the content of) such data.

According to the present invention, it is advantageously possible to provide secure software client applications, i.e. software client applications that can be trusted, by means of requiring an authentication step to be performed. Furthermore, data exchanged between especially the software client application instance and the third party server entity should preferably be transmitted in a protected manner, especially regarding confidentiality and/or integrity and/or originality and/or non-repudiation - and especially in a manner such that the application distribution entity is denied having access to (the content of) such data, or that the application distribution entity is at least does not have access to all such data (or the content thereof).

According to the present invention, the third party server entity corresponds, e.g., to an application server, i.e. providing the server component of the software client application (instance) on the client computing device.

In conventionally known systems, different methods exist in order to improve the security of the communication between software client applications on client computing devices on the one hand, and server entities (or third party server entities) on the other hand (or between different software client applications, especially on different client computing devices): The most common approach consists in using TLS (Transport Layer Security) by means of using server certificates, i.e. the servers are authenticated towards the software client applications. However, typically the software client applications do not have a certificate typically used with a version of the TLS protocol family and, thus, the respective servers are typically not able to authenticate the software client applications in an easy and intuitive (for a user of the software client application) manner, in a comparatively cheap and/or comparatively fast manner, without requiring user interaction (or, at least, without requiring extensive user interaction) and especially automatically. An alternative consists in transmitting a secret as part of the software client application. However, conventionally such secrets are typically not individual to each software client application instance; this means that two client computing devices, having the same software client application (while, of course, having different instances of the (same) software client application), would have the same secret - hence, an attacker able to retrieve that secret (common to all such instances of the software client application) would be able to eavesdrop on the communication between the software client application instances and the respective server, and could also make the respective server believe being a software client application instance of that kind (impersonation).

According to the present invention, the first partial information (generated either by the third party server entity and/or by the trusted entity and derived from the protected information) is transmitted, by the application distribution entity, to the client computing device, i.e. the first partial information is in any case transmitted, using a secure communication channel (i.e. the first secure communication channel) between the application distribution entity and the software client application instance (i.e. the client computing device). This secure communication channel is typically provided by the application distribution entity, i.e. typically by the application store or app store. According to the present invention, it is advantageously possible to combine the distribution of the software client application instance (to a specific client computing device) and the distribution or transmission of the first partial information. This provides the possibility to at least implicitly bind the first partial information (and, hence, also the protected information from which the first partial information is derived) to the software client application instance. This binding of the first partial information and/or of the protected information to the software client application instance also ensures that multiple requests to provide or to issue the first partial information and/or the protected information do not result in providing a plurality of pieces of first partial information and/or of protected information: typically, the application distribution entity ensures that each client computing device is able to download each software client application only once (of course, the download of updates is normally allowed).
Furtermore according to the present invention, the at least second partial information is transmitted to the client computing device using the third communication channel, which is different from the first secure communication channel. By means of using at least one different communication channel (or an at least one different secure communication channel) - i.e. different from the first secure communication channel - for transmitting the second partial information, it is not only possible that the application distribution entity is bypassed but it is also possible that the transmission of the protected information is rendered more secure and/or more protected. Hence, this provides the possibility to at least implicitly bind the second partial information (and, hence, also the protected information from which the second partial information is derived) to the software client application instance and/or to the client computing device. '
In order to obtain the protected information, at least the first partial information and the second partial information are necessary. Hency, by transmitting the first partial information and at least the second partial information using different (secure) communication channels, it is advantageously possible to bind the protected information to the software client application instance and/or to the client computing device

As a consequence, the client, i.e. the software client application instance within the client computing device, is equipped with the protected information providing the possibility of a cryptographically strong authentication of the client with regard to the third party server entity (and vice versa using the server certificate), e.g. by means of using TLS with mutual authentication. However, the method according to the present invention is independent from which specific protocol is used and which secure communication channel is used; other protocols than TLS, and also the use of a VPN (Virtual Private Network) channel is possible. According to the present invention, besides the authentication of the third party server (by means of server certificates), also the cryptographically strong authentication of the client (i.e. the software client application instance and/or the client computing device) is possible. Thereby, it is possible that a request (or transmitted data) received at the third party server entity is able to be unequivocally assigned to a specific software client application instance (and hence typically a person), or - especially in case of anonymous usage - that at least no fabricated data are received. An example of the latter situation might refer to a software client application that anonymously collects medical data, e.g. for a medical survey: Without an authentication of the data provided by the different software client application instances (of the different client computing devices of the participants of the survey), the reception of fabricated or manipulated data at the third party server entity (potentially leading to false results) cannot be excluded.

Additionally, the use of a protected information that is individual to the software client application instance limits the motivation of an attacker and also the potential damage: In case that an attacker is able to successfully retrieve the protected information, the use, according to the present invention, of an instance-specific protected information (i.e. specific to each software client application instance) also means that the attacker is only able use this specific protected information, i.e. with respect to this specific software client application instance; in order to use another software client application instance, the corresponding other proctected information would need to be retrieved.

According to the present invention, due to the fact that the generation of the protected information as well as the first partial information and at least the second partial information is typically performed on a backend side (typically at the third party server entity and/or at the trusted entity), the developer of the software client application is able to use a comparatively high cryptographic quality of the generated protected information (and/or of the first partial information and/or the at least second partial information); typically, at a backend side, more resources, especially concerning processing power, high-quality random number generators, etc., are available.

Furthermore according to the present invention, it is possible to newly transmit a (different) protected information (i.e. a different first partial information and a different at least second partial information) with each update of the software client application instance; especially in case of any doubts that any (previously transmitted protected information (i.e. a different first partial information and a different at least second partial information) and/or - as a consequence - previously used) client certificates might be compromised.

According to an embodiment of the present invention, the asymmetric pair of cryptographic keys comprises a specific private cryptographic key and a specific public cryptographic key, wherein the protected information comprises
-- at least the specific private cryptographic key, or
-- at least the specific private cryptographic key and the specific public cryptographic key,
and wherein the protected information is especially generated by the third party server entity.

According to the present invention and by using at least the specific private cryptographic key of an asymmetric pair of cryptographic keys as part of the protected information, it is advantageously possible that the software client application is able to be authenticated - i.e. provided with an enhanced level of authentication related to the software client application - (and thereby rendered more secure compared to a non-authenticated software client application) in an automated manner. By means of generating the asymmetric pair of cryptographic keys by the third party server entity, it is advantageously possible to efficiently use and implement the inventive method.

According to an embodiment of the present invention, the protected information comprises the security token information, especially generated by the trusted entity, wherein the security token information is transmitted from the trusted entity to the third party server entity, wherein in a subsequent step, a cryptographic key information is generated by the client computing device, and a client response information, comprising at least part of the cryptographic key information, is transmitted, from the client computing device, to the third party server entity,
wherein the cryptographic key information especially corresponds to a symmetric
cryptographic key, and wherein the symmetric cryptographic key is transmitted as at least part of the client response information, wherein especially the symmetric cryptographic key is used as a pre-shared cryptographic key in order to establish a TLS (Transport Layer Security) tunnel between the client computing device and the third party server entity, or
wherein the cryptographic key information corresponds to an asymmetric pair of cryptographic keys, comprising a specific private cryptographic key and a specific public cryptographic key, and wherein the specific public cryptographic key is transmitted as at least part of the client response information.

According to the present invention and by using a security token information as part of the protected information, it is advantageously possible that the software client application is able to be authenticated - i.e. provided with an enhanced level of authentication related to the software client application - (and thereby rendered more secure compared to a non-authenticated software client application) in an automated manner. By means of using the security token information as part of the protected information and generating a symmetric cryptographic key as a cryptographic key information by the client computing device as well as transmitting a client response information from the client computing device to the third party server entity, it is advantageously possible to efficiently use and implement the inventive method. Alternatively, by means of using, the security token information as part of the protected information and generating an asymmetric pair of cryptographic key as a cryptographic key information by the client computing device as well as transmitting a client response information from the client computing device to the third party server entity, it is advantageously possible to efficiently use and implement the inventive method.

According to an embodiment of the present invention, the third communication channel is established, by the third party server and/or by the trusted entity, using an address information related to the client computing device and requested from the application distribution entity during and/or prior to the first step,
wherein the third communication channel corresponds to a communication channel
-- via e-mail, or
-- via short message service (SMS), or
-- via some other messaging service, or
-- via push notification, or
-- via MSISDN, or
-- via postal delivey.

It is thereby advantageously possible to provide the third communication channel independently from the first secure communication channel.

According to an embodiment of the present invention, a server certificate is transmitted to the client computing device, using especially the first secure communication channel, wherein the server certificate is especially transmitted during the first step, wherein the server certificate is especially specific to the software client application instance or to the combination of the software client application instance and the client computing device,
wherein especially a TLS (Transport Layer Security) tunnel is established using the server certificate and/or wherein especially a certificate pinning is realized using the server certificate.

It is thereby advantageously possible to enhance the security level in the communication between the client computing device on the one hand, and the third party server entity on the other hand.

According to an embodiment of the present invention, - besides the first partial information the second partial information - at least a third partial information is derived from the protected information,
wherein, in the second step, the first partial information, the second partial information, and the at least third partial information is transmitted to the client computing device, the first partial information being transmitted - besides the software client application instance - using at least the first secure communication channel, the second partial information being transmitted using a third communication channel, and the at least third partial information being transmitted using either the third commmunication channel or a fourth communication channel, the fourth communication channel being different from the first secure communication channel and from the third communication channel,
wherein either at least the first partial information, the second partial information, and the third partial information are necessary to obtain the protected information, or wherein the first partial information and the second partial information are necessary to obtain the protected information.

Thereby, it is advantageously possible according to the present invention to use more than two pieces of partial information, such as a first partial information, a second partial information and a third partial information. According to such an embodiment, it is possible and preferred that all pieces of partial information are needed to obtain the protected information; alternatively, it is also possible and preferred that of all the pieces of partial information derived from the protected information, only a subset is required in order to obtain the protected information; however, it is preferred that in such a case (where only a subset of pieces of partial information is required in order to obtain the protected information), the first partial information (i.e. the one transmitted using the first secure communication channel) is mandatory for obtaining the protected information.

According to an embodiment of the present invention, a unique identity information is assigned to the software client application instance, the identity information being specific to the software client application instance or to the combination of the software client application instance and the client computing device, wherein during the second step, the identity information is transmitted to the client computing device as part of the first partial information and/or as part of the at least second partial information, wherein especially the identity information is transmitted - prior to the third step - by the client computing device to the third party server entity thereby establishing or using the third communication channel, different from the first secure communication channel.

By means of using a unique identity information that is assigned to the software client application instance, it is advantageously possible, according to the present invention, to identify each software client application instance distributed by the application distribution entity. Hence, according to an embodiment of the present invention, the identity information is additionally transmitted to the client computing device using the first secure communication channel (i.e. the identity information is transmitted additionally to the software client application instance as well as the first partial information.

According to a further embodiment of the present invention, the unique identity information is an anonymous information or a pseudonymous information or an information identifying the user of the software client application instance, and wherein - in case of the unique identity information being anonymous information - especially the unique identity information is independent from an identification of either the software client application instance and/or the software client application and/or the client computing device and/or the user of the client computing device (as in this case otherwise that data might be misused to break the intended anonymity).

According to a further embodiment of the present invention, the application distribution entity is an application store, wherein especially the trusted entity is identical to the third party server entity.

Furthermore, the present invention relates to a system for providing an enhanced level of authentication related to a secure software client application that is provided, by an application distribution entity, in order to be transmitted, using a telecommunications network, to a client computing device in view of software code of the software client application being executed by the client computing device, the system comprising the client computing device, the application distribution entity, and a third party server entity, wherein a first secure communication channel is established - in view of transmitting an instance of the software client application to the client computing device - between the client computing device and the application distribution entity, and wherein a second secure communication channel is established between the application distribution entity and the third party server entity, the system being configured such that:
-- an asymmetric pair of cryptographic keys and/or a security token information is generated as a protected information in view of subsequently allowing for an authenticated transmission of data - provided by the software client application instance upon it being executed by the client computing device - to the third party server entity, wherein the protected information is generated by the third party server entity and/or by a trusted entity, and wherein a first partial information and at least a second partial information is derived from the protected information,
-- the first partial information and the at least second partial information is transmitted to the client computing device, the first partial information being transmitted - besides the software client application instance - using at least the first secure communication channel, and the at least second partial information being transmitted using a third communication channel, different from the first secure communication channel, wherein at least the first partial information and the second partial information are necessary to obtain the protected information.

By means of such a system, it is advantageously possible according to the present invention to securely (i.e. in a protected manner) transmit the protected information to the client computing device.

Additionally, the present invention relates to a software client application instance or client computing device for providing an enhanced level of authentication related to the secure software client application that is provided, by an application distribution entity, in order to be transmitted, using a telecommunications network, to the client computing device in view of software code of the software client application being executed by the client computing device, wherein a first secure communication channel is established - in view of transmitting an instance of the software client application to the client computing device - between the client computing device and the application distribution entity, and a second secure communication channel being established between the application distribution entity and a third party server entity, the software client application instance or the client computing device being configured such that:
-- a first partial information and at least a second partial information is received by the client computing device, after an asymmetric pair of cryptographic keys and/or a security token information being generated as a protected information in view of subsequently allowing for an authenticated transmission of data - provided by the software client application instance upon it being executed by the client computing device - to the third party server entity, the protected information being generated by the third party server entity and/or by a trusted entity, and the first partial information and at least the second partial information being derived from the protected information,
wherein the first partial information is received - besides the software client application instance - using at least the first secure communication channel, and the at least second partial information being received using a third communication channel, different from the first secure communication channel, wherein at least the first partial information and the second partial information are necessary to obtain the protected information.

By means of such a software client application instance or client computing device, it is advantageously possible according to the present invention to securely (i.e. in a protected manner) transmit the protected information to the client computing device.

Furthermore, the present invention relates to a third party server entity for providing an enhanced level of authentication related to a secure software client application that is provided, by an application distribution entity, in order to be transmitted, using a telecommunications network, to a client computing device in view of software code of the software client application being executed by the client computing device, wherein a first secure communication channel is established - in view of transmitting an instance of the software client application to the client computing device - between the client computing device and the application distribution entity, and wherein a second secure communication channel is established between the application distribution entity and the third party server entity, the third party server entity being configured such that:
-- an asymmetric pair of cryptographic keys and/or a security token information is generated as a protected information in view of subsequently allowing for an authenticated transmission of data - provided by the software client application instance upon it being executed by the client computing device - to the third party server entity, wherein the protected information is generated by the third party server entity and/or by a trusted entity, and wherein a first partial information and at least a second partial information is derived from the protected information,
-- the first partial information and the at least second partial information is transmitted to the client computing device, the first partial information being transmitted - besides the software client application instance - using at least the first secure communication channel, and the at least second partial information being transmitted using a third communication channel, different from the first secure communication channel, wherein at least the first partial information and the second partial information are necessary to obtain the protected information.

By means of such a third party server entity, it is advantageously possible according to the present invention to securely (i.e. in a protected manner) transmit the protected information to the client computing device.

Furthermore, the present invention relates to a program comprising a computer readable program code which, when executed on a computer or on a client computing device or as part of a software client application instance or on an application distribution entity or on a trusted entity, or in part on a client computing device and/or in part as part of a software client application instance and/or in part on an application distribution entity and/or in part on a trusted entity, causes the computer and/or the client computing device and/or the software client application instance and/or the application distribution entity and/or the trusted entity to perform an inventive method.

Still additionally, the present invention relates to computer program product for providing an enhanced level of authentication related to a secure software client application provided by an application distribution entity, the computer program product comprising a computer program stored on a storage medium, the computer program comprising program code which, when executed on a computer or on a client computing device or as part of a software client application instance or on an application distribution entity or on a trusted entity, or in part on a client computing device and/or in part as part of a software client application instance and/or in part on an application distribution entity and/or in part on a trusted entity, causes the computer and/or the client computing device and/or the software client application instance and/or the application distribution entity and/or the trusted entity to perform an inventive method.

Additionally, the present invention relates to a computer-readable medium comprising instructions which when executed on a computer or on a client computing device or as part of a software client application instance or on an application distribution entity or on a trusted entity, or in part on a client computing device and/or in part as part of a software client application instance and/or in part on an application distribution entity and/or in part on a trusted entity, causes the computer or the client computing device or the software client application instance or the application distribution entity or the trusted entity to perform an inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates an exemplary system and situation according to the present invention where a mobile communication network - with a user equipment connected to the mobile communication network as a client computing device - is connected to an application distribution entity, and the client computing device is able to exchange information with a trusted entity and/or with a third party server entity.

Figure 2 schematically illustrates two examples of generating (or deriving) a first partial information and a second partial information based on a protected information.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

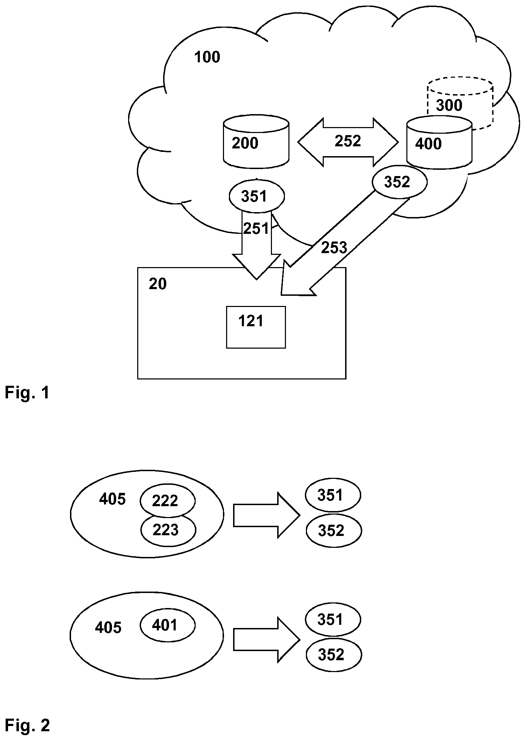

In Figure 1, a system for realizing the present invention is schematically shown, the system comprising a telecommunications network 100, especially a mobile communication network 100, and especially a public land mobile network 100. The telecommunications network 100 is connected to a user equipment 20 that is also referred to as a client computing device 20. The system furthermore also comprises an application distribution entity 200, and a third party server entity 400. The present invention is based on generating a protected information, and deriving a first partial information and at least a second partial information. According to one variant of the present invention, the protected information is generated by the third party server entity 400 (and no trusted entity 300 is necessarily present). According to another variant of the present invention, the protected information is generated by a trusted entity 300 (schematically shown in Figure 1 by means of dashed lines), and typically provided or transmitted to the third party entity 400.

In Figure 2, two examples of generating (or deriving) a first partial information 351 and a second partial information 352 based on a protected information 405 is schematically shown, wherein the first example is related to the protected information 405 comprising an asymmetric pair of cryptographic keys, comprising a specific private cryptographic key 222 and a specific public cryptographic key 223, and wherein the second example is related to the protected information 405 comprising a security token information 401.

According to the present invention, a software client application instance 121 is transmitted to the client computing device 20, i.e. after this transmission, the client computing device 20 comprises the software client application instance 121. Furthermore according to the present invention, a protected information 405 is transmitted to the client computing device 20. However, according to the present invention, the protected information 405 is not transmitted using one and the same transmission channel but using at least two transmission channels. Basically, the protected information is deviced into different parts (the first partial information and at least the second partial information) and transmitted using different transmission channels. Thereby, an enhanced level of authentication is able to be provided related to a secure software client application instance 121 and/or related to the client computing device 20. The software client application instance 121 is provided by the application distribution entity 200 in view of software code of the software client application being executed by the client computing device 20. A first secure communication channel 251 is established between the client computing device 20 and the application distribution entity 200. The first secure communication channel 251 is provided in view of transmitting the software client application instance 121 to the client computing device 20. A second secure communication channel 252 is established between the application distribution entity 200 and the third party server entity 400.

The protected information 405 (either comprising or corresponding to the asymmetric pair of cryptographic keys 222, 223 and/or to the security token information 401) is generated in view of subsequently allowing for an authenticated transmission of data - provided by the software client application instance 121 upon it being executed by the client computing device 20 - to the third party server entity 400. The protected information 405 is either generated by the third party server entity 400 and/or by a trusted entity 300, and the first partial information 351 and at least a second partial information 352 is derived from the protected information 405. Subsequently, the first partial information 351 is transmitted to the client computing device 20 using at least the first secure communication channel, wherein the first partial information 351 is preferably transmitted besides the software client application instance 121.

Additionally, the at least second partial information 352 is transmitted to the client computing device 20 using a third communication channel 253 which is different from the first secure communication channel 251.

According to the present invention, in order to obtain the protected information 405, at least the first partial information 351 and the second partial information 352 are necessary or required.

Thereby, it is assured that the application distribution entity 200 does not know sufficiently to obtain the protected information 405 (as only the first partial information 351 passes through the first secure communication channel 251, hence through the application distribution entity 200. The at least second partial information 352 is necessary to obtain the protected information 405. Put differently, according to the present invention, the protected information is split into at least the first and the second partial information 351, 352 (or the first and second partial information 351, 352 are derived from the protected information 405), and are transmitted using different transmission channels. Of course, the protected information might not be splitted in only two parts but in n parts (first partial information 351, ..., n-th partial information), n being a positive integer larger than or equal to 2 (or, respectively, n parts are derived from the protected information 405). According to the present invention, the protected information 405 or the pieces of partial information 351, 352 are provided such that, in order to obtain (or reconstruct) the protected information 405, at least m pieces of partial information are necessary to know, m being a positive integer smaller than or equal to n and larger than or equal to 2.

In the context of the present invention, especially the case of n = m = 2 is considered, i.e. the first partial information 351 and the second partial information 352 are derived from the protected information 405, and both the first and second partial information 351, 352 are necessary to obtain the protected information 405.

Furthermore, especially the case of n = 3 and m = 2 is considered, i.e. the first partial information 351, the second partial information 352 and a third partial information are derived from the protected information 405, and either the first partial information 351 as well as the second partial information 352, or, the first partial information 351 as well as the third partial information are necessary to obtain the protected information 405, i.e. the first partial information 351 (transmitted using the first secure communication channel 251) is always necessary. In this context, the second partial information 352 and the third partial information might either be transmitted using the same (third) communication channel 253, or the second partial information 352 is transmitted using the third communication channel 253, and the third partial information is transmitted using a fourth communication channel (not depicted in Figure 1). Additionally, the second and third partial information might be obtained (or derived from the protected information by means of a staged approach, i.e. in a first process step, the first partial information 351 and a further information is derived from the protected information 405, and in a second process step, the second partial information 352 and the third partial information is derived from the further information (obtained in the first process step).

According to the present invention, the approach of deriving at least a first and a second partial information 351, 352 from a protected information 405 is especially applied to the invention "method for providing an enhanced level of authentication related to a secure software client application ..." of unpublished European Patent applications 16 17 90 11.8 and 16 17 90 12.6, wherein especially the specific private cryptographic key 222 and/or the specific public cryptographic key 223 referred to in European Patent application 16 17 90 12.6 corresponds to the protected information 405, and wherein especially the security token information 401 referred to in European Patent application 16 17 90 11.8 corresponds to the protected information 405 - i.e. from the protected information 405, the first partial information 351 and the at least second partial information 352 are derived and the first partial information 351 transmitted using the first secure communication channel 351 (and the second partial information 352 transmitted using the third communication channel 253). This especially relates to situations where the protected information 405 is to be transmitted from the third party server entity 400 (e.g. a developer) to the software client application instance 121 and/or the client computing device 20.

## Claims

1. Method for providing an enhanced level of authentication related to a secure software client application that is provided, by an application distribution entity (200), in order to be transmitted, using a telecommunications network (100), to a client computing device (20) in view of software code of the software client application being executed by the client computing device (20),
wherein a first secure communication channel (251) is established - in view of transmitting an instance (121) of the software client application to the client computing device (20) - between the client computing device (20) and the application distribution entity (200), and wherein a second secure communication channel (252) is established between the application distribution entity (200) and a third party server entity (400),
wherein the method comprises the following steps:
-- in a first step, an asymmetric pair of cryptographic keys and/or a security token information (401) is generated as a protected information (405) in view of subsequently allowing for an authenticated transmission of data - provided by the software client application instance (121) upon it being executed by the client computing device (20) - to the third party server entity (400),
wherein the protected information (405) is generated by the third party server entity (400) and/or by a trusted entity (300), and wherein a first partial information (351) and at least a second partial information (352) is derived from the protected information (405),
-- wherein in a second step, subsequent to the first step, the first partial information (351) is transmitted to the client computing device (20), the first partial information (351) being transmitted - besides the software client application instance (121) - using at least the first secure communication channel (251),
-- wherein in a third step, subsequent to the first step, the at least second partial information (352) is transmitted to the client computing device (20), the at least second partial information (352) being transmitted using a third communication channel (253), different from the first secure communication channel (251),
wherein at least the first partial information (351) and the second partial information (352) are necessary to obtain the protected information (405).

2. Method according to claim 1, wherein the asymmetric pair of cryptographic keys comprises a specific private cryptographic key (222) and a specific public cryptographic key (223), wherein the protected information (405) comprises
-- at least the specific private cryptographic key (222), or
-- at least the specific private cryptographic key (222) and the specific public cryptographic key (223),
and wherein the protected information (405) is especially generated by the third party server entity (400).

3. Method according to claim 1, wherein the protected information (405) comprises the security token information (401), especially generated by the trusted entity (300), wherein the security token information (401) is transmitted from the trusted entity (300) to the third party server entity (400), wherein in a subsequent step, a cryptographic key information is generated by the client computing device (20), and a client response information (402), comprising at least part of the cryptographic key information, is transmitted, from the client computing device (20), to the third party server entity (400),
wherein the cryptographic key information especially corresponds to a symmetric cryptographic key (223), and wherein the symmetric cryptographic key (223) is transmitted as at least part of the client response information (402), wherein especially the symmetric cryptographic key (223) is used as a pre-shared cryptographic key in order to establish a TLS (Transport Layer Security) tunnel between the client computing device (20) and the third party server entity (400), or wherein the cryptographic key information corresponds to an asymmetric pair of cryptographic keys, comprising a specific private cryptographic key (222) and a specific public cryptographic key (223), and wherein the specific public cryptographic key (223) is transmitted as at least part of the client response information (402).

4. Method according to one of the preceding claims, wherein the third communication channel (253) is established, by the third party server (400) and/or by the trusted entity (300), using an address information related to the client computing device (20) and requested from the application distribution entity (200) during and/or prior to the first step,
wherein the third communication channel (253) corresponds to a communication channel
-- via e-mail, or
-- via short message service (SMS), or
-- via some other messaging service, or
-- via push notification, or
-- via MSISDN, or
-- via postal delivey.

5. Method according to one of the preceding claims, wherein a unique identity information (221) is assigned to the software client application instance (121), the identity information (221) being specific to the software client application instance (121) or to the combination of the software client application instance (121) and the client computing device (20), wherein the identity information (221) is transmitted to the client computing device (20) as part of the first partial information (351) and/or as part of the at least second partial information (352), wherein especially the identity information (221) is transmitted - prior to the third step - by the client computing device (20) to the third party server entity (400) thereby establishing or using the third communication channel (253), different from the first secure communication channel (251).

6. Method according to one of the preceding claims, wherein a server certificate (423) is transmitted to the client computing device (20), using especially the first secure communication channel (251), wherein the server certificate (423) is especially transmitted during the first step, wherein the server certificate (423) is especially specific to the software client application instance (121) or to the combination of the software client application instance (121) and the client computing device (20),
wherein especially a TLS (Transport Layer Security) tunnel is established using the server certificate (423) and/or wherein especially a certificate pinning is realized using the server certificate (423).

7. Method according to one of the preceding claims, wherein - besides the first partial information (351) the second partial information (352) - at least a third partial information (353) is derived from the protected information (405),
wherein, in the second step, the first partial information (351), the second partial information (352), and the at least third partial information (353) is transmitted to the client computing device (20), the first partial information (351) being transmitted - besides the software client application instance (121) - using at least the first secure communication channel (251), the second partial information (352) being transmitted using a third communication channel (253), and the at least third partial information (353) being transmitted using either the third commmunication channel (253) or a fourth communication channel (254), the fourth communication channel (254) being different from the first secure communication channel (251) and from the third communication channel (253), wherein either at least the first partial information (351), the second partial information (352), and the third partial information (353) are necessary to obtain the protected information (405), or wherein the first partial information (351) and the second partial information (352) are necessary to obtain the protected information (405).

8. Method according to one of the preceding claims, wherein the application distribution entity (200) is an application store, wherein especially the trusted entity is identical to the third party server entity (400).

9. System for providing an enhanced level of authentication related to a secure software client application that is provided, by an application distribution entity (200), in order to be transmitted, using a telecommunications network (100), to a client computing device (20) in view of software code of the software client application being executed by the client computing device (20), the system comprising the client computing device (20), the application distribution entity (200), and a third party server entity (400),
wherein a first secure communication channel (251) is established - in view of transmitting an instance (121) of the software client application to the client computing device (20) - between the client computing device (20) and the application distribution entity (200), and wherein a second secure communication channel (252) is established between the application distribution entity (200) and the third party server entity (400),
the system being configured such that:
-- an asymmetric pair of cryptographic keys and/or a security token information (401) is generated as a protected information (405) in view of subsequently allowing for an authenticated transmission of data - provided by the software client application instance (121) upon it being executed by the client computing device (20) - to the third party server entity (400),
wherein the protected information (405) is generated by the third party server entity (400) and/or by a trusted entity (300), and wherein a first partial information (351) and at least a second partial information (352) is derived from the protected information (405),
-- the first partial information (351) and the at least second partial information (352) is transmitted to the client computing device (20), the first partial information (351) being transmitted - besides the software client application instance (121) - using at least the first secure communication channel (251), and the at least second partial information (352) being transmitted using a third communication channel (253), different from the first secure communication channel (251),
wherein at least the first partial information (351) and the second partial information (352) are necessary to obtain the protected information (405).

10. Software client application instance (121) or client computing device (20) for providing an enhanced level of authentication related to the secure software client application that is provided, by an application distribution entity (200), in order to be transmitted, using a telecommunications network (100), to the client computing device (20) in view of software code of the software client application being executed by the client computing device (20),
wherein a first secure communication channel (251) is established - in view of transmitting an instance (121) of the software client application to the client computing device (20) - between the client computing device (20) and the application distribution entity (200), and a second secure communication channel (252) being established between the application distribution entity (200) and a third party server entity (400),
the software client application instance (121) or the client computing device (20) being configured such that:
-- a first partial information (351) and at least a second partial information (352) is received by the client computing device (20), after an asymmetric pair of cryptographic keys and/or a security token information (401) being generated as a protected information (405) in view of subsequently allowing for an authenticated transmission of data - provided by the software client application instance (121) upon it being executed by the client computing device (20) - to the third party server entity (400), the protected information (405) being generated by the third party server entity (400) and/or by a trusted entity (300), and the first partial information (351) and at least the second partial information (352) being derived from the protected information (405),
wherein the first partial information (351) is received - besides the software client application instance (121) - using at least the first secure communication channel (251), and the at least second partial information (352) being received using a third communication channel (253), different from the first secure communication channel (251), wherein at least the first partial information (351) and the second partial information (352) are necessary to obtain the protected information (405).

11. Third party server entity (400) for providing an enhanced level of authentication related to a secure software client application that is provided, by an application distribution entity (200), in order to be transmitted, using a telecommunications network (100), to a client computing device (20) in view of software code of the software client application being executed by the client computing device (20), wherein a first secure communication channel (251) is established - in view of transmitting an instance (121) of the software client application to the client computing device (20) - between the client computing device (20) and the application distribution entity (200), and wherein a second secure communication channel (252) is established between the application distribution entity (200) and the third party server entity (400),
the third party server entity (400) being configured such that:
-- an asymmetric pair of cryptographic keys and/or a security token information (401) is generated as a protected information (405) in view of subsequently allowing for an authenticated transmission of data - provided by the software client application instance (121) upon it being executed by the client computing device (20) - to the third party server entity (400),
wherein the protected information (405) is generated by the third party server entity (400) and/or by a trusted entity (300), and wherein a first partial information (351) and at least a second partial information (352) is derived from the protected information (405),
-- the first partial information (351) and the at least second partial information (352) is transmitted to the client computing device (20), the first partial information (351) being transmitted - besides the software client application instance (121) - using at least the first secure communication channel (251), and the at least second partial information (352) being transmitted using a third communication channel (253), different from the first secure communication channel (251),
wherein at least the first partial information (351) and the second partial information (352) are necessary to obtain the protected information (405).

12. Program comprising a computer readable program code which, when executed on a computer or on a client computing device (20) or as part of a software client application instance (121) or on an application distribution entity (200) or on a trusted entity (300), or in part on a client computing device (20) and/or in part as part of a software client application instance (121) and/or in part on an application distribution entity (200) and/or in part on a trusted entity (300), causes the computer and/or the client computing device (20) and/or the software client application instance (121) and/or the application distribution entity (200) and/or the trusted entity (300) to perform a method according one of claims 1 to 8.

13. Computer program product for providing an enhanced level of authentication related to a secure software client application provided by an application distribution entity (200), the computer program product comprising a computer program stored on a storage medium, the computer program comprising program code which, when executed on a computer or on a client computing device (20) or as part of a software client application instance (121) or on an application distribution entity (200) or on a trusted entity (300), or in part on a client computing device (20) and/or in part as part of a software client application instance (121) and/or in part on an application distribution entity (200) and/or in part on a trusted entity (300), causes the computer and/or the client computing device (20) and/or the software client application instance (121) and/or the application distribution entity (200) and/or the trusted entity (300) to perform a method according one of claims 1 to 8.

## Patentansprüche

1. Verfahren zum Bereitstellen einer verbesserten Authentifizierungsqualität in Bezug auf eine sichere Software-Client-Anwendung, die durch eine Anwendungsverteilungsentität (200) bereitgestellt wird, um unter Verwendung eines Telekommunikationsnetzes (100) an eine Client-Computervorrichtung (20) im Hinblick auf Software-Code der Software-Client-Anwendung, die durch die Client-Computervorrichtung (20) ausgeführt wird, gesendet zu werden, wobei ein erster sicherer Kommunikationskanal (251) - im Hinblick auf das Senden einer Instanz (121) der Software-Client-Anwendung an die Client-Computervorrichtung (20) - zwischen der Client-Computervorrichtung (20) und der Anwendungsverteilungsentität (200) hergestellt wird und wobei ein zweiter sicherer Kommunikationskanal (252) zwischen der Anwendungsverteilungsentität (200) und einer Drittanbieter-Serverentität (400) hergestellt wird,
wobei das Verfahren die folgenden Schritte umfasst:
- in einem ersten Schritt wird ein asymmetrisches Paar kryptographischer Schlüssel und/oder eine Sicherheits-Token-Information (401) als eine geschützte Information (405) generiert, um anschließend eine authentifizierte Übertragung von Daten - die durch die Software-Client-Anwendungsinstanz (121) bei ihrer Ausführung durch die Client-Computervorrichtung (20) bereitgestellt werden - an die Drittanbieter-Serverentität (400) zu ermöglichen,
wobei die geschützte Information (405) durch die Drittanbieter-Serverentität (400) und/oder durch eine vertrauenswürdige Entität (300) generiert wird und wobei eine erste Teilinformation (351) und mindestens eine zweite Teilinformation (352) aus der geschützten Information (405) abgeleitet werden,
- wobei in einem zweiten Schritt, im Anschluss an den ersten Schritt, die erste Teilinformation (351) an die Client-Computervorrichtung (20) gesendet wird, wobei die erste Teilinformation (351) - neben der Software-Client-Anwendungsinstanz (121) - unter Verwendung mindestens des ersten sicheren Kommunikationskanals (251) gesendet wird,
- wobei in einem dritten Schritt, im Anschluss an den ersten Schritt, die mindestens zweite Teilinformation (352) an die Client-Computervorrichtung (20) gesendet wird, wobei die mindestens zweite Teilinformation (352) unter Verwendung eines dritten Kommunikationskanals (253) gesendet wird, der sich von dem ersten sicheren Kommunikationskanal (251) unterscheidet, wobei mindestens die erste Teilinformation (351) und die zweite Teilinformation (352) notwendig sind, um die geschützte Information (405) zu erhalten.

2. Verfahren nach Anspruch 1, wobei das asymmetrische Paar kryptographischer Schlüssel einen spezifischen privaten kryptographischen Schlüssel (222) und einen spezifischen öffentlichen kryptographischen Schlüssel (223) umfasst, wobei die geschützten Informationen (405) umfassen:
- mindestens den spezifischen privaten kryptografischen Schlüssel (222) oder
- mindestens den spezifischen privaten kryptographischen Schlüssel (222) und den spezifischen öffentlichen kryptographischen Schlüssel (223),
und wobei die geschützte Information (405) insbesondere durch die Drittanbieter-Serverentität (400) generiert wird.

3. Verfahren nach Anspruch 1, wobei die geschützte Information (405) die - insbesondere durch die vertrauenswürdige Entität (300) generierte - Sicherheits-Token-Information (401) umfasst, wobei die Sicherheits-Token-Information (401) von der vertrauenswürdigen Entität (300) an die Drittanbieter-Serverentität (400) gesendet wird, wobei in einem anschließenden Schritt eine Kryptographische-Schlüssel-Information durch die Client-Computervorrichtung (20) generiert wird, und eine Client-Antwortinformation (402), die mindestens einen Teil der Kryptographischen-Schlüssel-Information umfasst, von der Client-Computervorrichtung (20) an die Drittanbieter-Serverentität (400) gesendet wird, wobei die Kryptographische-Schlüssel-Information insbesondere einem symmetrischen kryptografischen Schlüssel (223) entspricht und wobei der symmetrische kryptografische Schlüssel (223) als mindestens ein Teil der Client-Antwortinformation (402) gesendet wird, wobei insbesondere der symmetrische kryptografische Schlüssel (223) als ein vorab verbreiteter kryptografischer Schlüssel verwendet wird, um einen TLS (Transport Layer Security)-Tunnel zwischen der Client-Computervorrichtung (20) und der Drittanbieter-Serverentität (400) herzustellen, oder wobei die Kryptographische-Schlüssel-Information einem asymmetrischen Paar kryptografischer Schlüssel entspricht, das einen spezifischen privaten kryptografischen Schlüssel (222) und einen spezifischen öffentlichen kryptografischen Schlüssel (223) umfasst, und wobei der spezifische öffentliche kryptografische Schlüssel (223) als mindestens ein Teil der Client-Antwortinformation (402) gesendet wird.

4. Verfahren nach einem der vorangehenden Ansprüche, wobei der dritte Kommunikationskanal (253) durch den Drittanbieter-Server (400) und/oder durch die vertrauenswürdige Entität (300) unter Verwendung einer Adressinformation, die sich auf die Client-Computervorrichtung (20) bezieht und von der Anwendungsverteilungsentität (200) während und/oder vor dem ersten Schritt angefordert wird, hergestellt wird,
wobei der dritte Kommunikationskanal (253) einem Kommunikationskanal
- per E-Mail oder
- per Short Message Service (SMS) oder
- über einen anderen Nachrichtendienst oder
- per Push-Benachrichtigung oder
- über MSISDN oder
- per Postversand
entspricht.

5. Verfahren nach einem der vorangehenden Ansprüche, wobei der Software-Client-Anwendungsinstanz (121) eine eindeutige Identitätsinformation (221) zugewiesen wird, wobei die Identitätsinformation (221) für die Software-Client-Anwendungsinstanz (121) oder für die Kombination aus der Software-Client-Anwendungsinstanz (121) und dem Client-Computervorrichtung (20) spezifisch ist, wobei die Identitätsinformation (221) als Teil der ersten Teilinformation (351) und/oder als Teil der mindestens zweiten Teilinformation (352) an die Client-Computervorrichtung (20) gesendet wird, wobei insbesondere die Identitätsinformation (221) - vor dem dritten Schritt - durch die Client-Computervorrichtung (20) an die Drittanbieter-Serverentität (400) gesendet wird, wodurch der dritte Kommunikationskanal (253), der sich von dem ersten sicheren Kommunikationskanal (251) unterscheidet, hergestellt oder verwendet wird.

6. Verfahren nach einem der vorangehenden Ansprüche, wobei ein Server-Zertifikat (423) an die Client-Computervorrichtung (20), insbesondere unter Verwendung des ersten sicheren Kommunikationskanals (251), gesendet wird, wobei das Server-Zertifikat (423) insbesondere während des ersten Schritts gesendet wird, wobei das Server-Zertifikat (423) insbesondere für die Software-Client-Anwendungsinstanz (121) oder für die Kombination aus der Software-Client-Anwendungsinstanz (121) und der Client-Computervorrichtung (20) spezifisch ist, wobei insbesondere ein TLS (Transport Layer Security)-Tunnel unter Verwendung des Server-Zertifikats (423) hergestellt wird und/oder wobei insbesondere ein Zertifikats-Pinning unter Verwendung des Server-Zertifikats (423) realisiert wird.

7. Verfahren nach einem der vorangehenden Ansprüche, wobei - neben der ersten Teilinformation (351) und der zweiten Teilinformation (352) - mindestens eine dritte Teilinformation (353) aus der geschützten Information (405) abgeleitet wird,
wobei - in dem zweiten Schritt - die erste Teilinformation (351), die zweite Teilinformation (352), und die mindestens dritte Teilinformation (353) an die Client-Computervorrichtung (20) gesendet werden, wobei die erste Teilinformation (351) - neben der Software-Client-Anwendungsinstanz (121) - unter Verwendung mindestens des ersten sicheren Kommunikationskanals (251) gesendet wird, die zweite Teilinformation (352) unter Verwendung eines dritten Kommunikationskanals (253) gesendet wird und die mindestens dritte Teilinformation (353) unter Verwendung entweder des dritten Kommunikationskanals (253) oder eines vierten Kommunikationskanals (254) gesendet wird, wobei sich der vierte Kommunikationskanal (254) von dem ersten sicheren Kommunikationskanal (251) und von dem dritten Kommunikationskanal (253) unterscheidet,
wobei entweder mindestens die erste Teilinformation (351), die zweite Teilinformation (352) und die dritte Teilinformation (353) erforderlich sind, um die geschützte Information (405) zu erhalten, oder wobei die erste Teilinformation (351) und die zweite Teilinformation (352) erforderlich sind, um die geschützte Information (405) zu erhalten.

8. Verfahren nach einem der vorangehenden Ansprüche, wobei die Anwendungsverteilungsentität (200) ein Anwendungsspeicher ist, wobei insbesondere die vertrauenswürdige Entität mit der Drittanbieter-Serverentität (400) identisch ist.

9. System zum Bereitstellen einer verbesserten Authentifizierungsqualität in Bezug auf eine sichere Software-Client-Anwendung, die durch eine Anwendungsverteilungsentität (200) bereitgestellt wird, um unter Verwendung eines Telekommunikationsnetzes (100) an eine Client-Computervorrichtung (20) im Hinblick auf Software-Code der Software-Client-Anwendung, die durch die Client-Computervorrichtung (20) ausgeführt wird, gesendet zu werden, wobei das System die Client-Computervorrichtung (20), die Anwendungsverteilungsentität (200) und eine Drittanbieter-Serverentität (400) umfasst,
wobei ein erster sicherer Kommunikationskanal (251) - im Hinblick auf das Senden einer Instanz (121) der Software-Client-Anwendung an die Client-Computervorrichtung (20) - zwischen der Client-Computervorrichtung (20) und der Anwendungsverteilungsentität (200) hergestellt wird und wobei ein zweiter sicherer Kommunikationskanal (252) zwischen der Anwendungsverteilungsentität (200) und der Drittanbieter-Serverentität (400) hergestellt wird,
wobei das System so eingerichtet ist, dass:
- ein asymmetrisches Paar kryptographischer Schlüssel und/oder eine Sicherheits-Token-Information (401) als eine geschützte Information (405) generiert wird, um anschließend eine authentifizierte Übertragung von Daten - die durch die Software-Client-Anwendungsinstanz (121) bei ihrer Ausführung durch die Client-Computervorrichtung (20) bereitgestellt werden - an die Drittanbieter-Serverentität (400) zu ermöglichen,
wobei die geschützte Information (405) durch die Drittanbieter-Serverentität (400) und/oder durch eine vertrauenswürdige Entität (300) generiert wird und wobei eine erste Teilinformation (351) und mindestens eine zweite Teilinformation (352) aus der geschützten Information (405) abgeleitet werden,
- die erste Teilinformation (351) und die mindestens zweite Teilinformation (352) an die Client-Computervorrichtung (20) gesendet werden, wobei die erste Teilinformation (351) - neben der Software-Client-Anwendungsinstanz (121) - unter Verwendung mindestens des ersten sicheren Kommunikationskanals (251) gesendet wird, und die mindestens zweite Teilinformation (352) unter Verwendung eines dritten Kommunikationskanals (253), der sich von dem ersten sicheren Kommunikationskanal (251) unterscheidet, gesendet wird, wobei mindestens die erste Teilinformation (351) und die zweite Teilinformation (352) erforderlich sind, um die geschützte Information (405) zu erhalten.

10. Software-Client-Anwendungsinstanz (121) oder Client-Computervorrichtung (20) zum Bereitstellen einer verbesserten Authentifizierungsqualität in Bezug auf eine sichere Software-Client-Anwendung, die durch eine Anwendungsverteilungsentität (200) bereitgestellt wird, um unter Verwendung eines Telekommunikationsnetzes (100) an die Client-Computervorrichtung (20) im Hinblick auf Software-Code der Software-Client-Anwendung, die durch die Client-Computervorrichtung (20) ausgeführt wird, gesendet zu werden, wobei ein erster sicherer Kommunikationskanal (251) - im Hinblick auf das Senden einer Instanz (121) der Software-Client-Anwendung an die Client-Computervorrichtung (20) - zwischen der Client-Computervorrichtung (20) und der Anwendungsverteilungsentität (200) hergestellt wird und ein zweiter sicherer Kommunikationskanal (252) zwischen der Anwendungsverteilungsentität (200) und einer Drittanbieter-Serverentität (400) hergestellt wird,
wobei die Software-Client-Anwendungsinstanz (121) oder die Client-Computervorrichtung (20) so eingerichtet ist, dass:
- eine erste Teilinformation (351) und mindestens eine zweite Teilinformation (352) durch die Client-Computervorrichtung (20) empfangen wird, nachdem ein asymmetrisches Paar kryptographischer Schlüssel und/oder eine Sicherheits-Token-Information (401) als eine geschützte Information (405) generiert wurde, um anschließend eine authentifizierte Übertragung von Daten - die durch die Software-Client-Anwendungsinstanz (121) bei ihrer Ausführung durch die Client-Computervorrichtung (20) bereitgestellt werden - an die Drittanbieter-Serverentität (400) zu ermöglichen, die geschützte Information (405) durch die Drittanbieter-Serverentität (400) und/oder durch eine vertrauenswürdige Entität (300) generiert wird, und die erste Teilinformation (351) und mindestens die zweite Teilinformation (352) von der geschützten Information (405) abgeleitet werden,
wobei die erste Teilinformation (351) - neben der Software-Client-Anwendungsinstanz (121) - unter Verwendung mindestens des ersten sicheren Kommunikationskanals (251) empfangen wird und wobei die mindestens zweite Teilinformation (352) unter Verwendung eines dritten Kommunikationskanals (253), der sich von dem ersten sicheren Kommunikationskanal (251) unterscheidet, empfangen wird, wobei mindestens die erste Teilinformation (351) und die zweite Teilinformation (352) erforderlich sind, um die geschützten Informationen (405) zu erhalten.

11. Drittanbieter-Serverentität (400) zum Bereitstellen einer verbesserten Authentifizierungsqualität in Bezug auf eine sichere Software-Client-Anwendung, die durch eine Anwendungsverteilungsentität (200) bereitgestellt wird, um unter Verwendung eines Telekommunikationsnetzes (100) an eine Client-Computervorrichtung (20) im Hinblick auf Software-Code der Software-Client-Anwendung, die durch die Client-Computervorrichtung (20) ausgeführt wird, gesendet zu werden, wobei ein erster sicherer Kommunikationskanal (251) - im Hinblick auf das Senden einer Instanz (121) der Software-Client-Anwendung an die Client-Computervorrichtung (20) - zwischen der Client-Computervorrichtung (20) und der Anwendungsverteilungsentität (200) hergestellt wird und wobei ein zweiter sicherer Kommunikationskanal (252) zwischen der Anwendungsverteilungsentität (200) und der Drittanbieter-Serverentität (400) hergestellt wird,
wobei die Drittanbieter-Serverentität (400) so eingerichtet ist, dass:
- ein asymmetrisches Paar kryptographischer Schlüssel und/oder eine Sicherheits-Token-Information (401) als eine geschützte Information (405) generiert wird, um anschließend eine authentifizierte Übertragung von Daten - die durch die Software-Client-Anwendungsinstanz (121) bei ihrer Ausführung durch die Client-Computervorrichtung (20) bereitgestellt werden - an die Drittanbieter-Serverentität (400) zu ermöglichen,
wobei die geschützte Information (405) durch die Drittanbieter-Serverentität (400) und/oder durch eine vertrauenswürdige Entität (300) generiert wird und wobei eine erste Teilinformation (351) und mindestens eine zweite Teilinformation (352) aus der geschützten Information (405) abgeleitet werden,
- die erste Teilinformation (351) und die mindestens zweite Teilinformation (352) an die Client-Computervorrichtung (20) gesendet werden, wobei die erste Teilinformation (351) - neben der Software-Client-Anwendungsinstanz (121) - unter Verwendung mindestens des ersten sicheren Kommunikationskanals (251) gesendet wird und die mindestens zweite Teilinformation (352) unter Verwendung eines dritten Kommunikationskanals (253), der sich von dem ersten sicheren Kommunikationskanal (251) unterscheidet, gesendet wird, wobei mindestens die erste Teilinformation (351) und die zweite Teilinformation (352) erforderlich sind, um die geschützte Information (405) zu erhalten.

12. Programm, das einen computerlesbaren Programmcode umfasst, der, wenn er auf einem Computer oder in einer Client-Computervorrichtung (20) oder als Teil einer Software-Client-Anwendungsinstanz (121) oder in einer Anwendungsverteilungsentität (200) oder in einer vertrauenswürdigen Entität (300) oder teilweise in einer Client-Computervorrichtung (20) und/oder teilweise als Teil einer Software-Client-Anwendungsinstanz (121) und/oder teilweise in einer Anwendungsverteilungsentität (200) und/oder teilweise in einer vertrauenswürdigen Entität (300) ausgeführt wird, den Computer und/oder die Client-Computervorrichtung (20) und/oder die Software-Client-Anwendungsinstanz (121) und/oder die Anwendungsverteilungsentität (200) und/oder die vertrauenswürdige Entität (300) veranlasst, ein Verfahren nach einem der Ansprüche 1 bis 8 auszuführen.

13. Computerprogrammprodukt zum Bereitstellen einer verbesserten Authentifizierungsqualität in Bezug auf eine sichere Software-Client-Anwendung, die durch eine Anwendungsverteilungsentität (200) bereitgestellt wird, wobei das Computerprogrammprodukt ein Computerprogramm umfasst, das auf einem Speichermedium gespeichert ist, wobei das Computerprogramm Programmcode umfasst, der, wenn er auf einem Computer oder in einer Client-Computervorrichtung (20) oder als Teil einer Software-Client-Anwendungsinstanz (121) oder in einer Anwendungsverteilungsentität (200) oder in einer vertrauenswürdigen Entität (300) oder teilweise in einer Client-Computervorrichtung (20) und/oder teilweise als Teil einer Software-Client-Anwendungsinstanz (121) und/oder teilweise in einer Anwendungsverteilungsentität (200) und/oder teilweise in einer vertrauenswürdigen Entität (300) ausgeführt wird, den Computer und/oder die Client-Computervorrichtung (20) und/oder die Software-Client-Anwendungsinstanz (121) und/oder die Anwendungsverteilungsentität (200) und/oder die vertrauenswürdige Entität (300) veranlasst, ein Verfahren nach einem der Ansprüche 1 bis 8 auszuführen.

## Revendications

1. Procédé permettant de procurer un niveau accru d'authentification associé à une application logicielle client sécurisée qui est fournie, par une entité de distribution d'applications (200), afin d'être transmise, à l'aide d'un réseau de télécommunications (100), à un dispositif informatique client (20), en vue de l'exécution d'un code logiciel de l'application logicielle client par le dispositif informatique client (20),
dans lequel un premier canal de communication sécurisé (251) est établi - en vue de transmettre une instance (121) de l'application logicielle client au dispositif informatique client (20) - entre le dispositif informatique client (20) et l'entité de distribution d'applications (200), et dans lequel un deuxième canal de communication sécurisé (252) est établi entre l'entité de distribution d'applications (200) et une entité serveur tiers (400),
dans lequel le procédé comprend les étapes suivantes :
- dans une première étape, une paire asymétrique de clés cryptographiques et/ou une information de jeton de sécurité (401) est ou sont produite (s) en tant qu'informations protégées (405) en vue de permettre par la suite une transmission authentifiée de données - fournies par l'instance d'application logicielle client (121) lors de son exécution par le dispositif informatique client (20) - à l'entité serveur tiers (400),
dans lequel les informations protégées (405) sont produites par l'entité serveur tiers (400) et/ou par une entité de confiance (300), et dans lequel une première information partielle (351) et au moins une deuxième information partielle (352) sont déduites des informations protégées (405),
- dans lequel, dans une deuxième étape postérieure à la première étape, la première information partielle (351) est transmise au dispositif informatique client (20), la première information partielle (351) étant transmise - en plus de l'instance d'application logicielle client (121) - à l'aide au moins du premier canal de communication sécurisé (251),
- dans lequel, dans une troisième étape postérieure à la première étape, l'au moins deuxième information partielle (352) est transmise au dispositif informatique client (20), l'au moins deuxième information partielle (352) étant transmise à l'aide d'un troisième canal de communication (253), différent du premier canal de communication sécurisé (251), dans lequel au moins la première information partielle (351) et la deuxième information partielle (352) sont nécessaires pour obtenir les informations protégées (405).

2. Procédé selon la revendication 1, dans lequel la paire asymétrique de clés cryptographiques comprend une clé cryptographique privée spécifique (222) et une clé cryptographique publique spécifique (223), dans lequel les informations protégées (405) comprennent :
- au moins la clé cryptographique privée spécifique (222) ou
- au moins la clé cryptographique privée spécifique (222) et la clé cryptographique publique spécifique (223),
et dans lequel les informations protégées (405) sont spécialement produites par l'entité serveur tiers (400).

3. Procédé selon la revendication 1, dans lequel les informations protégées (405) comprennent l'information de jeton de sécurité (401), spécialement produite par l'entité de confiance (300), dans lequel l'information de jeton de sécurité (401) est transmise par l'entité de confiance (300) à l'entité serveur tiers (400), dans lequel, dans une étape ultérieure, une information de clé(s) cryptographique(s) est produite par le dispositif informatique client (20), et une information de réponse de client (402), comprenant au moins une partie de l'information de clé(s) cryptographique(s), est transmise, par le dispositif informatique client (20) à l'entité serveur tiers (400),
dans lequel l'information de clé(s) cryptographique(s) correspond en particulier à une clé cryptographique symétrique (223), et dans lequel la clé cryptographique symétrique (223) est transmise en tant que partie au moins de l'information de réponse de client (402), dans lequel en particulier, la clé cryptographique symétrique (223) est utilisée comme une clé cryptographique prépartagée afin d'établir un tunnel TLS (*transport layer security,* de sécurité de la couche de transport) entre le dispositif informatique client (20) et l'entité serveur tiers (400), ou dans lequel l'information de clé(s) cryptographique(s) correspond à une paire asymétrique de clés cryptographiques, comprenant une clé cryptographique privée spécifique (222) et une clé cryptographique publique spécifique (223), et dans lequel la clé cryptographique publique spécifique (223) est transmise en tant que partie au moins de l'information de réponse de client (402).

4. Procédé selon l'une des revendications précédentes, dans lequel le troisième canal de communication (253) est établi par l'entité serveur tiers (400) et/ou par l'entité de confiance (300), à l'aide d'une information d'adresse se rapportant au dispositif informatique client (20) et demandée à l'entité de distribution d'applications (200) pendant et/ou avant la première étape,
dans lequel le troisième canal de communication (253) correspond à un canal de communication :
- par courrier électronique ou
- par service de messages courts (SMS, *short message service*) ou
- par un autre service de messagerie ou
- par notification à distribution sélective ou
- par numéro MSISDN ou
- par remise postale.

5. Procédé selon l'une des revendications précédentes, dans lequel une information d'identité unique (221) est attribuée à l'instance d'application logicielle client (121), l'information d'identité (221) étant spécifique à l'instance d'application logicielle client (121) ou à la combinaison de l'instance d'application logicielle client (121) et du dispositif informatique client (20), dans lequel l'information d'identité (221) est transmise au dispositif informatique client (20) en tant que partie de la première information partielle (351) et/ou en tant que partie de l'au moins deuxième information partielle (352), dans lequel, en particulier, l'information d'identité (221) est transmise - avant la troisième étape - par le dispositif informatique client (20) à l'entité serveur tiers (400), en permettant ainsi d'établir ou d'utiliser le troisième canal de communication (253), différent du premier canal de communication sécurisé (251).

6. Procédé selon l'une des revendications précédentes, dans lequel un certificat de serveur (423) est transmis au dispositif informatique client (20), à l'aide, en particulier, du premier canal de communication sécurisé (251), dans lequel le certificat de serveur (423) est transmis, en particulier, au cours de la première étape, dans lequel le certificat de serveur (423) est en particulier spécifique à l'instance d'application logicielle client (121) ou à la combinaison de l'instance d'application logicielle client (121) et du dispositif informatique client (20),
dans lequel, en particulier, un tunnel TLS (*transport layer security,* de sécurité de la couche de transport) est établi à l'aide du certificat de serveur (423) et/ou dans lequel, en particulier, un épinglage de certificat est réalisé à l'aide du certificat de serveur (423).

7. Procédé selon l'une des revendications précédentes, dans lequel - en plus de la première information partielle (351) et de la deuxième information partielle (352) - au moins une troisième information partielle (353) est déduite des informations protégées (405), dans lequel, dans la deuxième étape, la première information partielle (351), la deuxième information partielle (352) et l'au moins troisième information partielle (353) sont transmises au dispositif informatique client (20), la première information partielle (351) étant transmise - en plus de l'instance d'application logicielle client (121) - à l'aide au moins du premier canal de communication sécurisé (251), la deuxième information partielle (352) étant transmise à l'aide d'un troisième canal de communication (253), et l'au moins troisième information partielle (353) étant transmise à l'aide soit du troisième canal de communication (253) soit d'un quatrième canal de communication (254), le quatrième canal de communication (254) étant différent du premier canal de communication sécurisé (251) et du troisième canal de communication (253), dans lequel soit au moins la première information partielle (351), la deuxième information partielle (352) et la troisième information partielle (353) sont nécessaires pour obtenir les informations protégées (405), soit la première information partielle (351) et la deuxième information partielle (352) sont nécessaires pour obtenir les informations protégées (405).

8. Procédé selon l'une des revendications précédentes, dans lequel l'entité de distribution d'applications (200) est un magasin d'applications, dans lequel, en particulier, l'entité de confiance est identique à l'entité serveur tiers (400).

9. Système permettant de procurer un niveau accru d'authentification associé à une application logicielle client sécurisée qui est fournie, par une entité de distribution d'applications (200), afin d'être transmise, à l'aide d'un réseau de télécommunications (100), à un dispositif informatique client (20), en vue de l'exécution d'un code logiciel de l'application logicielle client par le dispositif informatique client (20), le système comprenant le dispositif informatique client (20), l'entité de distribution d'applications (200) et une entité serveur tiers (400),
dans lequel un premier canal de communication sécurisé (251) est établi - en vue de transmettre une instance (121) de l'application logicielle client au dispositif informatique client (20) - entre le dispositif informatique client (20) et l'entité de distribution d'applications (200), et dans lequel un deuxième canal de communication sécurisé (252) est établi entre l'entité de distribution d'applications (200) et l'entité serveur tiers (400),
le système étant conçu de telle sorte que :
- une paire asymétrique de clés cryptographiques et/ou une information de jeton de sécurité (401) soi(en)t produite(s) en tant qu'informations protégées (405) en vue de permettre par la suite une transmission authentifiée de données - fournies par l'instance d'application logicielle client (121) lors de son exécution par le dispositif informatique client (20) - à l'entité serveur tiers (400),
dans lequel les informations protégées (405) sont produites par l'entité serveur tiers (400) et/ou par une entité de confiance (300), et dans lequel une première information partielle (351) et au moins une deuxième information partielle (352) sont déduites des informations protégées (405),
- la première information partielle (351) et l'au moins deuxième information partielle (352) sont transmises au dispositif informatique client (20), la première information partielle (351) étant transmise - en plus de l'instance d'application logicielle client (121) - à l'aide au moins du premier canal de communication sécurisé (251), et l'au moins deuxième information partielle (352) étant transmise à l'aide d'un troisième canal de communication (253), différent du premier canal de communication sécurisé (251), dans lequel au moins la première information partielle (351) et la deuxième information partielle (352) sont nécessaires pour obtenir les informations protégées (405).

10. Instance d'application logicielle client (121) ou dispositif informatique client (20) permettant de procurer un niveau accru d'authentification associé à l'application logicielle client sécurisée qui est fournie, par une entité de distribution d'applications (200), afin d'être transmise, à l'aide d'un réseau de télécommunications (100), au dispositif informatique client (20), en vue de l'exécution d'un code logiciel de l'application logicielle client par le dispositif informatique client (20),
dans laquelle un premier canal de communication sécurisé (251) est établi - en vue de transmettre une instance (121) de l'application logicielle client au dispositif informatique client (20) - entre le dispositif informatique client (20) et l'entité de distribution d'applications (200), un deuxième canal de communication sécurisé (252) étant établi entre l'entité de distribution d'applications (200) et une entité serveur tiers (400),
l'instance d'application logicielle client (121) ou le dispositif informatique client (20) étant conçu(e) de telle sorte que :
- une première information partielle (351) et au moins une deuxième information partielle (352) soient reçues par le dispositif informatique client (20), après qu'une paire asymétrique de clés cryptographiques et/ou une information de jeton de sécurité (401) a ou ont été produite(s) en tant qu'informations protégées (405) en vue de permettre par la suite une transmission authentifiée de données - fournies par l'instance d'application logicielle client (121) lors de son exécution par le dispositif informatique client (20) - à l'entité serveur tiers (400), les informations protégées (405) étant produites par l'entité serveur tiers (400) et/ou par une entité de confiance (300), et la première information partielle (351) et au moins la deuxième information partielle (352) étant déduites des informations protégées (405),
dans laquelle la première information partielle (351) est reçue - en plus de l'instance d'application logicielle client (121) - à l'aide au moins du premier canal de communication sécurisé (251), l'au moins deuxième information partielle (352) étant reçue à l'aide d'un troisième canal de communication (253), différent du premier canal de communication sécurisé (251), dans laquelle au moins la première information partielle (351) et la deuxième information partielle (352) sont nécessaires pour obtenir les informations protégées (405).

11. Entité serveur tiers (400) permettant de procurer un niveau accru d'authentification associé à une application logicielle client sécurisée qui est fournie, par une entité de distribution d'applications (200), afin d'être transmise, à l'aide d'un réseau de télécommunications (100), à un dispositif informatique client (20), en vue de l'exécution d'un code logiciel de l'application logicielle client par le dispositif informatique client (20), dans laquelle un premier canal de communication sécurisé (251) est établi - en vue de transmettre une instance (121) de l'application logicielle client au dispositif informatique client (20) - entre le dispositif informatique client (20) et l'entité de distribution d'applications (200), et dans laquelle un deuxième canal de communication sécurisé (252) est établi entre l'entité de distribution d'applications (200) et l'entité serveur tiers (400),
l'entité serveur tiers (400) étant conçue de telle sorte que
- une paire asymétrique de clés cryptographiques et/ou une information de jeton de sécurité (401) soi(en)t produite(s) en tant qu'informations protégées (405) en vue de permettre par la suite une transmission authentifiée de données - fournies par l'instance d'application logicielle client (121) lors de son exécution par le dispositif informatique client (20) - à l'entité serveur tiers (400),
dans laquelle les informations protégées (405) sont produites par l'entité serveur tiers (400) et/ou par une entité de confiance (300), et dans laquelle une première information partielle (351) et au moins une deuxième information partielle (352) sont déduites des informations protégées (405),
- la première information partielle (351) et l'au moins deuxième information partielle (352) sont transmises au dispositif informatique client (20), la première information partielle (351) étant transmise - en plus de l'instance d'application logicielle client (121) - à l'aide au moins du premier canal de communication sécurisé (251), et l'au moins deuxième information partielle (352) étant transmise à l'aide d'un troisième canal de communication (253), différent du premier canal de communication sécurisé (251), dans laquelle au moins la première information partielle (351) et la deuxième information partielle (352) sont nécessaires pour obtenir les informations protégées (405).

12. Programme comprenant un code de programme lisible par ordinateur, qui, lorsqu'il est exécuté sur un ordinateur ou sur un dispositif informatique client (20) ou en tant que partie d'une instance d'application logicielle client (121) ou sur une entité de distribution d'applications (200) ou sur une entité de confiance (300), ou en partie sur un dispositif informatique client (20) et/ou en partie en tant que partie d'une instance d'application logicielle client (121) et/ou en partie sur une entité de distribution d'applications (200) et/ou en partie sur une entité de confiance (300), fait mettre en œuvre à l'ordinateur et/ou au dispositif informatique client (20) et/ou à l'instance d'application logicielle client (121) et/ou à l'entité de distribution d'applications (200) et/ou à l'entité de confiance (300) un procédé selon l'une des revendications 1 à 8.

13. Produit-programme informatique permettant de procurer un niveau accru d'authentification associé à une application logicielle client sécurisée, fournie par une entité de distribution d'applications (200), le produit-programme informatique comprenant un programme informatique stocké sur un support de stockage, le programme informatique comprenant un code de programme qui, lorsqu'il est exécuté sur un ordinateur ou sur un dispositif informatique client (20) ou en tant que partie d'une instance d'application logicielle client (121) ou sur une entité de distribution d'applications (200) ou sur une entité de confiance (300), ou en partie sur un dispositif informatique client (20) et/ou en partie en tant que partie d'une instance d'application logicielle client (121) et/ou en partie sur une entité de distribution d'applications (200) et/ou en partie sur une entité de confiance (300), fait mettre en œuvre à l'ordinateur et/ou au dispositif informatique client (20) et/ou à l'instance d'application logicielle client (121) et/ou à l'entité de distribution d'applications (200) et/ou à l'entité de confiance (300) un procédé selon l'une des revendications 1 à 8.
